(19) Europäisches Patentamt / European Patent Office / Office européen des brevets

(11) **EP 2 880 661 B1**

(12) **FASCICULE DE BREVET EUROPEEN**

(45) Date de publication et mention de la délivrance du brevet:
**12.07.2017 Bulletin 2017/28**

(21) Numéro de dépôt: **13756611.3**

(22) Date de dépôt: **26.07.2013**

(51) Int Cl.:
**G21D 1/00** *(2006.01)*    **G21F 9/28** *(2006.01)*
**G01T 1/167** *(2006.01)*    **G01V 5/02** *(2006.01)*
**G21C 17/00** *(2006.01)*

(86) Numéro de dépôt international:
**PCT/FR2013/051817**

(87) Numéro de publication internationale:
**WO 2014/020269 (06.02.2014 Gazette 2014/06)**

(54) **PROCEDE ET SYSTEME POUR INSPECTER UNE INSTALLATION NUCLEAIRE**

VERFAHREN UND SYSTEM ZUR INSPEKTION EINER KERNKRAFTANLAGE

METHOD AND SYSTEM FOR INSPECTING A NUCLEAR FACILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2012 FR 1257505**

(43) Date de publication de la demande:
**10.06.2015 Bulletin 2015/24**

(73) Titulaire: **Soletanche Freyssinet**
**92500 Rueil Malmaison (FR)**

(72) Inventeur: **BINDEL, Laurent**
**F-91120 Palaiseau (FR)**

(74) Mandataire: **Cabinet Plasseraud**
**66 rue de la Chaussée d'Antin**
**75440 Paris Cedex 09 (FR)**

(56) Documents cités:
JP-A- 9 236 666    US-A1- 2003 136 916
US-A1- 2004 075 058    US-A1- 2006 241 410
US-B1- 6 518 579

• **A. AL-GHAMDI ET AL.: "Estimating the depth of embedded contaminants from in-situ gamma spectroscopic measurements", HEALTH PHYSICS, vol. 84, no. 5, 5 mai 2003 (2003-05-05), pages 632-636, XP009168198,**

**Description**

La présente invention concerne les techniques d'inspection des installations nucléaires. Elle vise à estimer la distribution de substances radioactives dans la structure de l'installation.

Il existe plusieurs méthodes pour déterminer *in situ* la quantité de radionucléides dans une installation nucléaire. Cependant, la limitation principale de ces méthodes réside dans la détermination de la distribution en profondeur de ces radionucléides, en particulier dans les enceintes en béton faisant partie de l'installation. La connaissance de cette distribution est essentielle pour les activités de démantèlement, par exemple pour déterminer l'épaisseur de matériau à enlever.

Une méthode de contraste par distance consiste à effectuer deux mesures à deux distances du milieu à caractériser (mur ou sol, par exemple), puis à exploiter leur rapport. Voir A. Al-Ghamdi, et X. G. XU, "Estimating the Depth of Embedded Contaminants From in-Situ Gamma Spectroscopic Measurements", Health Physics, Vol. 84, No. 5, mai 2003, pp. 632-636. Cette première méthode convient pour des sources à géométrie définie localisées près de la surface inspectée, mais pas pour des sources de forme inconnue.

Une autre méthode utilise l'atténuation de deux raies gamma. Elle suppose l'existence d'un isotope émettant deux énergies différentes. Voir M. Korun, et al., "In-situ measurements of the radioactive fallout deposit", Nuclear Instruments and Methods in Physics Research, Vol. A300, No. 3, février 1991, pp. 611-615, ou M. Korun, et al., "In-situ measurement of Cs distribution in the soil", Nuclear Instruments and Methods in Physics Research, Vol. B93, No. 4, septembre 1994, pp. 485-491. Cette méthode ne permet d'estimer qu'un seul paramètre en profondeur. De plus, cette approche suppose une distribution spatiale uniforme des radionucléides.

Le brevet US 6 528 797 décrit une méthode angulaire applicable à tout matériau/milieu à condition que ses propriétés d'atténuation soient négligeables, connues, mesurables ou estimables. La méthode angulaire permet de caractériser des distributions en profondeur complexes. La distribution en profondeur est calculée sans connaissance *a priori*, sans hypothèse sur sa forme, sans nécessité d'utiliser des méthodes invasives complémentaires. La méthode est basée sur une différenciation en angle et en énergie.

Le document D5=US 2003/136916 A1 divulgue une méthode d'inspection comprenant un détecteur de rayonnement collimaté, des mesures à différentes distances et un analyseur pour analyser les mesures à différentes distances en subdivisant la région cylindrique en plusieurs mailles de façon à estimer des niveaux de radioactivité respectifs dans les mailles.

Les techniques actuelles ne permettent pas de déterminer commodément sur site, de façon rapide et précise la contamination radiologique en profondeur dans des ouvrages de génie civil, par exemple, une installation nucléaire. L'obtention d'une cartographie en trois dimensions de la contamination présente dans les murs de l'installation nucléaire à démanteler serait très utile pour optimiser à la source le tri des déchets. Cette cartographie pourrait être directement liée à une classification officielle, en répertoriant l'activité par unité de masse tout en évaluant la composition isotopique des sources radioactives. Par ailleurs, la localisation et la détermination des sources radioactives en profondeur restent un problème de taille pour les études de radioprotection lors de chantiers de démantèlement. Les méthodes existantes restent trop contraignantes.

A l'heure actuelle, on effectue des analyses spectrochimiques d'éléments carottés en laboratoire. Celles-ci induisent des coûts et des délais spécifiques ainsi que du travail réglementaire lors de la constitution de dossiers de demande d'autorisation de transport.

Un objectif de la présente invention est de proposer une technique capable de déterminer de façon rapide et précise la profondeur de contamination dans le cas de sources volumiques dont la distribution n'est pas connue ou pour des sources hétérogènes.

Un autre objectif de la présente invention est de proposer un système et un procédé *in situ* et non destructifs de détermination de la profondeur de contamination radiologique. Cela permet d'évaluer correctement les volumes de déchets afin d'optimiser leur séparation et leur classification.

Il est proposé un procédé et un système d'inspection d'une installation nucléaire. Le procédé comprend :

- disposer un détecteur de rayonnement (2) devant une surface (20) d'une portion de l'installation (1), le détecteur de rayonnement étant collimaté pour recevoir du rayonnement d'une région cylindrique (25) de la portion de l'installation;
- réaliser plusieurs mesures du rayonnement reçu par le détecteur de rayonnement (2) pour différentes énergies d'émission et différentes distances, le long de l'axe (X) de la région cylindrique, entre le détecteur de rayonnement (2) et la surface de la portion d'installation (1);
- analyser les mesures de rayonnement en subdivisant la région cylindrique en plusieurs mailles (3) de façon à estimer des niveaux de radioactivité respectifs dans les mailles, et

dans lequel l'analyse des mesures de rayonnement comprend une inversion d'un système linéaire C.a = m, qui est effectuée sur un calculateur, où:

- m est un vecteur ayant pour composantes les mesures de rayonnement réalisées;
- a est un vecteur ayant pour composantes les niveaux de radioactivité à estimer pour les différentes mailles; et
- C est une matrice ayant pour composantes des valeurs pré-calculées en fonction:

  - des énergies d'émission du rayonnement dans les mesures réalisées;
  - des distances, lors des mesures réalisées, entre le détecteur de rayonnement (2) et la surface (20) de la portion d'installation; et
  - des temps pendant lesquels les mesures de rayonnement sont réalisées.

Le système comprend:

- un détecteur de rayonnement (2) collimaté pour recevoir du rayonnement d'une région cylindrique (25) d'une portion de l'installation (1) et réaliser plusieurs mesures dudit rayonnement pour différentes énergies d'émission et différentes distances, le long de l'axe (X) de la région cylindrique, entre le détecteur de rayonnement (2) et une surface (20) de la portion d'installation;
- un analyseur pour analyser les mesures de rayonnement en subdivisant la région cylindrique en plusieurs mailles de façon à estimer des niveaux de radioactivité respectifs dans les mailles, et
- un calculateur pour effectuer ladite analyse des mesures, l'analyse des mesures de rayonnement comprenant une inversion d'un système linéaire C.a = m, où:

  - m est un vecteur ayant pour composantes les mesures de rayonnement réalisées;
  - a est un vecteur ayant pour composantes les niveaux de radioactivité à estimer pour les différentes mailles; et
  - C est une matrice ayant pour composantes des valeurs pré-calculées en fonction:

    - des énergies d'émission du rayonnement dans les mesures réalisées;
    - des distances, lors des mesures réalisées, entre le détecteur de rayonnement (2) et la surface (20) de la portion d'installation; et
    - des temps pendant lesquels les mesures de rayonnement sont réalisées.

Le détecteur de rayonnement peut notamment être disposé de façon à ce que la région cylindrique ait son axe perpendiculaire à la surface de la portion d'installation.

Dans une réalisation, les mailles sont des tranches de la région cylindrique subdivisées perpendiculairement à l'axe de la région cylindrique.

Une méthode de régularisation peut être appliquée dans l'inversion du système linéaire.

Un mode de réalisation du système proposé comprend un collimateur associé au détecteur de rayonnement, réglable pour n'envoyer vers le détecteur que du rayonnement provenant de ladite région cylindrique, quelle que soit la distance choisie entre le détecteur de rayonnement et la surface de la portion d'installation. Le collimateur peut notamment avoir une partie mobile et une partie fixe permettant la translation du détecteur le long de l'axe de la région cylindrique à l'intérieur du collimateur.

Le système peut encore comporter un dispositif de visée laser pour assurer que l'axe de la région cylindrique reste perpendiculaire à la surface de la portion d'installation.

D'autres particularités et avantages de la présente invention apparaîtront dans la description ci-après d'un exemple de réalisation non limitatif, en référence aux dessins annexés, dans lesquels :

- la figure 1 est une vue en perspective montrant schématiquement le principe d'inspection d'une installation nucléaire selon l'invention;

- la figure 2 illustre la géométrie d'un modèle selon l'invention auquel il peut être fait référence pour l'estimation des niveaux d'activité d'une installation nucléaire.

- la figure 3 montre un exemple de paramètres dimensionnels qui ont été testés pour valider la méthode d'estimation des niveaux d'activité selon l'invention ;

- la figure 4 est une vue en perspective d'un système pour inspecter une installation nucléaire dans un milieu selon un mode de réalisation préféré de l'invention ;

- la figure 5 est une vue en coupe selon l'axe X' de la partie fixe du collimateur du mode de réalisation illustré dans la figure 4.

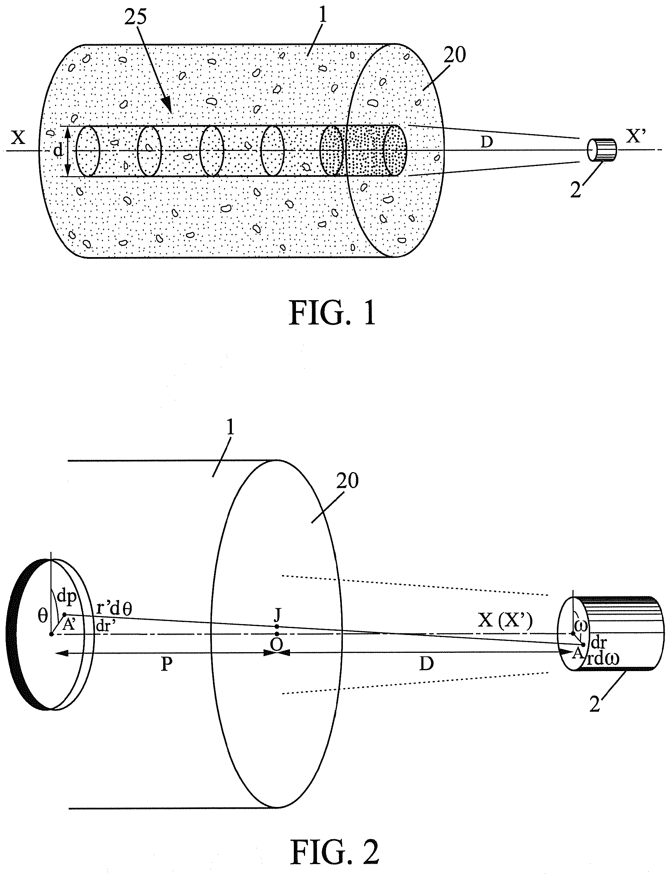

Le procédé selon l'invention utilise une différenciation en distance et en énergie pour obtenir des profils radioactifs. Il comporte la réalisation de plusieurs mesures (deux, trois, quatre voire plus) sur un milieu 1, à des distances D différentes pour plusieurs raies d'émissions par un système de détection comprenant au moins un détecteur de rayonnement 2 (figure 1).

Le « milieu » dont il s'agit, est une portion d'une installation nucléaire contenant des radionucléides. Cette portion peut faire partie du sol ou d'éléments structurels d'une construction en béton ou en acier, contaminée par des radionucléides.

Pour effectuer les mesures, on dispose le détecteur de rayonnement 2 devant une surface 20 du milieu 1. Le détecteur de rayonnement 2 est disposé de façon à ce qu'il reçoive du rayonnement d'une région cylindrique 25 de diamètre d ayant son axe X perpendiculaire à la surface 20.

Le détecteur de rayonnement 2 est collimaté pour recevoir du rayonnement en provenance de cette même région cylindrique 25 quelle que soit la distance D. La collimation est par exemple réalisée à l'aide d'un collimateur en plomb aligné sur l'axe X, qui peut donc être vu aussi comme un axe X' du système de détection.

Plusieurs mesures du rayonnement reçu par le détecteur 2 sont effectuées à différentes énergies d'émission et pour différentes distances D, le long de l'axe X, entre le détecteur de rayonnement 2 et la surface 20 du milieu 1.

Les mesures à des distances différentes par rapport à la surface 20 sont réalisées par translation du détecteur de rayonnement 2 parallèlement à son axe X'. Les énergies d'émission sont présélectionnées en fonction du spectre des radionucléides qu'on s'attend à rencontrer dans la structure, par exemple des raies de l'Europium 152 et/ou 154 qu'on trouve souvent dans des bétons activés.

Les mesures de rayonnement sont analysées à l'aide d'un calculateur faisant référence à un modèle selon lequel la région cylindrique examinée est subdivisée en plusieurs mailles de diamètre d, ayant par exemple des épaisseurs régulières, de façon à estimer des niveaux de radioactivité respectifs dans les mailles.

La figure 2 illustre la géométrie d'un modèle auquel il peut être fait référence pour estimer des niveaux d'activité $a_i$ selon l'invention. Les notations sont les suivantes:

- O est le point situé à l'intersection de l'axe X' du détecteur de rayonnement 2 avec la surface 20 du milieu 1 à laquelle le détecteur de rayonnement 2 fait face;

- A est un point de l'ouverture du détecteur de rayonnement 2, formant le centre d'un petit élément de surface dS = r.dr.d$\omega$, où r et $\omega$ désignent des coordonnées polaires de A dans le plan sensible du détecteur 2 qui est perpendiculaire à l'axe X';

- A' est le centre d'un petit élément de volume cylindrique dV appartenant à la région cylindrique 25. Ce point A' est situé à une profondeur p en arrière de la surface 20 et à une distance r' de l'axe X (X'). Relativement au point origine O et à l'axe X (X'), le point A' a pour coordonnées polaires (p, r', $\theta$), et le volume élémentaire dV a pour expression dV = r'.dr'.d$\theta$.dp = dS'.dp, en notant dS' = r'.dr'.d$\theta$; et

- J est l'intersection entre le segment allant de A' à A et la surface 20.

Le carré de la distance A'A entre les points A et A' est donné par:

$$A'A^2 = (D+p)^2 + (\rho.\sin\theta - r.\sin\omega)^2 + (\rho.\cos\theta - r.\cos\omega)^2 \qquad (1)$$

tandis que la distance A'J entre les points A' et J est donnée par:

$$A'J = A'A \times p/(D+p) \qquad (2)$$

Le flux élémentaire $\delta\varphi(E)$ du rayonnement gamma à l'énergie d'émission E allant du volume élémentaire dV autour du point A' à la surface de détecteur élémentaire dS autour du point A peut s'exprimer de la manière suivante:

$$\delta\varphi(\mathrm{E}) = \frac{\mathrm{e}^{-\mu(\mathrm{E}).\mathrm{A'J}}}{4\pi.\mathrm{A'A}^2}.\mathrm{dS.dS'.dp} \tag{3}$$

où $\mu(\mathrm{E})$, en unités de $\mathrm{cm}^{-1}$, est le coefficient d'atténuation du rayonnement dans le béton à l'énergie E.

Pour une mesure à la distance D de la surface 20 du milieu 1, le nombre $M_D(\mathrm{E})$ d'événements comptés par le détecteur 2 à une énergie E est exprimé par:

$$M_D(\mathrm{E}) = \varepsilon(\mathrm{E}).\mathrm{Y}(\mathrm{E}).t_D.\sum_{i=1}^{n} a_i.\mathrm{F'}_{D,i}(\mathrm{E}) \tag{4}$$

où: n est le nombre de mailles dans la subdivision de la région cylindrique 25;

$t_D$ est la durée de la mesure faite à la distance D;

$\varepsilon(\mathrm{E})$ est le rendement intrinsèque du détecteur 2 à l'énergie E;

$\mathrm{Y}(\mathrm{E})$ est le rapport de branchement de la raie d'émission d'énergie E;

$a_i$ est le niveau d'activité volumique de la maille i, c'est-à-dire une quantité qu'on cherche à déterminer; et

$\mathrm{F'}_{D,i}$ est une intégrale de flux pour la maille cylindrique i ayant le même diamètre que la région 25 et allant de la profondeur $p_{i-1}$ à la profondeur $p_i$, donnée par:

$$\mathrm{F'}_{D,i}(\mathrm{E}) = \int_{p_{i-1}}^{p_i} \iint_{S\,S'} \delta\varphi(\mathrm{E}) \tag{5}$$

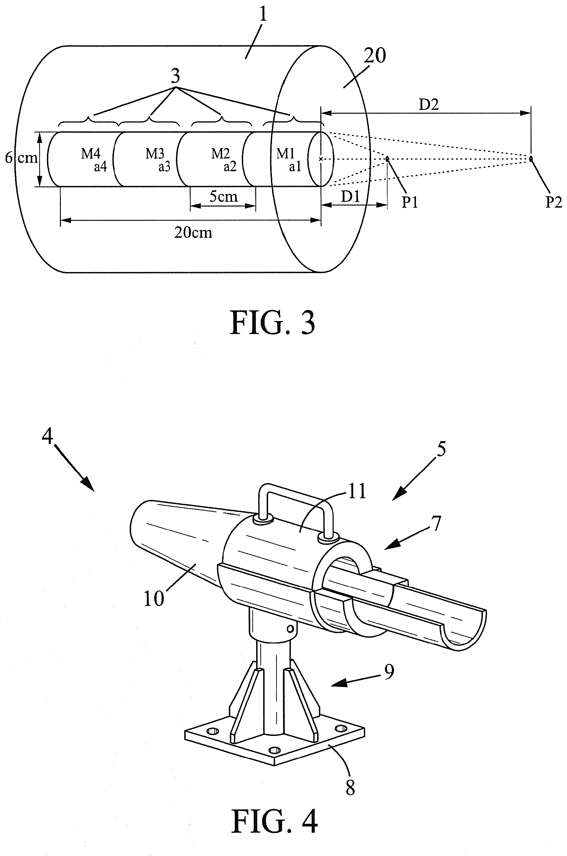

A titre d'exemple, on peut choisir de discrétiser la région cylindrique 25 du milieu de béton en n = 4 mailles M1-M4 comme illustré sur la figure 3, et d'effectuer deux mesures à deux distances $D_1$, $D_2$ pour deux énergies différentes $E_1$, $E_2$ du rayonnement gamma. En notant:

$$\mathrm{F}_{D,i} = \varepsilon(\mathrm{E}).\mathrm{Y}(\mathrm{E}).\mathrm{F'}_{D,i}.t_D \tag{6}$$

on introduit la matrice:

$$\underline{\underline{C}} = \begin{pmatrix} \mathrm{F}_{D_1,1}(\mathrm{E}_1) & \mathrm{F}_{D_1,2}(\mathrm{E}_1) & \mathrm{F}_{D_1,3}(\mathrm{E}_1) & \mathrm{F}_{D_1,4}(\mathrm{E}_1) \\ \mathrm{F}_{D_1,1}(\mathrm{E}_2) & \mathrm{F}_{D_1,2}(\mathrm{E}_2) & \mathrm{F}_{D_1,3}(\mathrm{E}_2) & \mathrm{F}_{D_1,4}(\mathrm{E}_2) \\ \mathrm{F}_{D_2,1}(\mathrm{E}_1) & \mathrm{F}_{D_2,2}(\mathrm{E}_1) & \mathrm{F}_{D_2,3}(\mathrm{E}_1) & \mathrm{F}_{D_2,4}(\mathrm{E}_1) \\ \mathrm{F}_{D_2,1}(\mathrm{E}_2) & \mathrm{F}_{D_2,2}(\mathrm{E}_2) & \mathrm{F}_{D_2,3}(\mathrm{E}_2) & \mathrm{F}_{D_2,4}(\mathrm{E}_2) \end{pmatrix} \tag{7}$$

et le système linéaire:

$$\underline{\underline{C}}.\underline{a} = \underline{m} \tag{8}$$

où: $\underline{m} = (M_{D_1}(\mathrm{E}_1), M_{D_1}(\mathrm{E}_2), M_{D_2}(\mathrm{E}_1), M_{D_2}(\mathrm{E}_2))^{\mathrm{T}}$ est un vecteur dont les composantes sont les mesures de rayonnement réalisées $M_D(\mathrm{E})$;

$\underline{a} = (a_1, a_2, a_3, a_4)^{\mathrm{T}}$ est un vecteur dont les composantes sont les niveaux de d'activité volumique $a_i$ à estimer pour les différentes mailles.

En observant les relations (6), (5), (3), (2) et (1), on voit que les composantes $\mathrm{F}_{D,i}$ de la matrice $\underline{\underline{C}}$ peuvent être calculées à l'avance en fonction:

- des valeurs de $\mu(\mathrm{E}_1)$, $\mu(\mathrm{E}_2)$, de $\varepsilon(\mathrm{E}_1)$, $\varepsilon(\mathrm{E}_2)$ et de $\mathrm{Y}(\mathrm{E}_1)$, $\mathrm{Y}(\mathrm{E}_2)$ qui sont elles-mêmes des fonctions connues des

énergies d'émission $E_1$, $E_2$ du rayonnement utilisé dans les mesures;

- des distances $D_1$, $D_2$ entre le détecteur 2 et la surface 20; et
- des temps $t_{D_1}$, $t_{D_2}$ pendant lesquels les mesures de rayonnement sont réalisées.

Une inversion du système linéaire (8) permet alors d'estimer les niveaux de radioactivité $a_i$ à partir des mesures $M_D(E)$.

La méthode ci-dessus présente une grande liberté dans le choix des paramètres d'entrée: maillage, distances de mesure, et énergies. Ceux-ci sont fonction de la situation rencontrée et de la méthode de résolution du système.

Le système linéaire (8) peut être résolu de différentes manières. Pour pouvoir le faire, il ne faut pas moins de mesures indépendantes $M_D(E)$ que d'inconnues $a_i$, de sorte que le nombre de lignes $\ell$ de la matrice ($\ell$ est le nombre de mesures, c'est-à-dire le nombre de distances de mesures D multiplié par le nombre d'énergies considérées E) est au moins égal à son nombre de colonnes n. Dans l'exemple illustratif ci-dessus, on a pris $\ell = n = 4$.

Une méthode de résolution directe du système linéaire peut être choisie : génération des vecteurs $\underline{a}_k$, multiplication par la matrice $\underline{C}$ puis sélection des $\underline{m}_k$ correspondants en les comparant aux mesures à l'aide d'un critère de norme. L'algorithme commence par encadrer l'espace des solutions puis effectue un crible discret plus ou moins précis de tout l'espace.

Une technique de résolution par moindres carrés est d'une utilisation commode pour inverser le système (8). Elle consiste à rechercher le vecteur $\underline{a}$ qui minimise la norme $\| \underline{C}.\underline{a} - \underline{m} \|^2$. Classiquement, la solution s'exprime par:

$$\hat{\underline{a}} = (\underline{C}^T.\underline{C})^{-1}.\underline{C}^T.\underline{m} \qquad (9)$$

Pour améliorer la stabilité de la solution trouvée, on peut avoir recours, de façon connue, à une technique de régularisation consistant à exprimer le vecteur des niveaux d'activité estimés $\hat{\underline{a}}$ selon:

$$\hat{\underline{a}} = (\underline{C}^T.\underline{C} + \lambda.\underline{\Delta}^T.\underline{\Delta})^{-1}.\underline{C}^T.\underline{m} \qquad (9)$$

où: $\underline{\Delta}$ est une matrice diagonale de taille n x n, par exemple la matrice identité pour une régularisation au premier ordre; et

$\lambda$ un paramètre de régularisation, par exemple déterminé suivant la méthode dite "L-Curve" (voir P.C. Hansen, "Analysis of discrete ill-posed problems by means of the L-curve", SIAM Review, Vol. 34, No. 4, décembre 1992, pp. 561-580) qui établit un compromis fiable entre l'adéquation aux données et le modèle de régularisation via une courbe en L.

La figure 3 montre un exemple de paramètres dimensionnels qui ont été testés pour valider la méthode d'estimation des niveaux d'activité. Le milieu source, par exemple un mur en béton d'épaisseur 20 cm, a une région cylindrique 25 de diamètre 6 cm discrétisée en quatre mailles 3 (M1-M4) d'épaisseur $p_i - p_{i-1}$ = 5 cm. Chaque maille est supposée contenir une activité volumique moyenne $a_i$ (i = 1, 2, 3, 4). Pour limiter le temps de calcul, on a assimilé le détecteur de rayonnement 2 à un point P (P1-P2) dans les tests, cette hypothèse n'affectant pas les résultats obtenus.

Il est utile d'avoir un contraste de distance assez important tout en obtenant une mesure significative. Les tests ont été conduits avec deux mesures effectuées à une première distance $D_1$ = 10 cm puis à une deuxième distance $D_2$ = 70 cm avec des temps de mesure $T_{D_1}$ = 180 s et $T_{D_2}$ = 5 $T_{D_1}$ = 900 s. Ce choix a notamment permis d'améliorer le conditionnement de la matrice $\underline{C}$. Les raies des isotopes 152 et 154 de l'Europium ont été utilisées car ces isotopes sont souvent présents dans des bétons activés. La géométrie ci-dessus conduit à obtenir une matrice carrée $\underline{C}$ de rang quatre. Étant donné la mise en place de deux mesures, il est nécessaire d'utiliser au moins deux raies d'émission à deux énergies différentes pour pouvoir déterminer (au sens mathématique du terme) le système linéaire. La prise en compte de trois raies peut être avantageuse pour permettre la surdétermination du système.

Une fois que les mesures ont été effectuées dans la région cylindrique 25, l'appareillage comportant le détecteur de rayonnement 2 peut être déplacé parallèlement à la structure pour procéder à une nouvelle estimation. On peut ainsi obtenir une cartographie 3D des niveaux de radioactivité dans la structure.

La méthode offre une flexibilité importante avec la possibilité de choisir en fonction de la situation les énergies d'émission du rayonnement, le maillage, les distances et les temps de mesure.

Une possibilité est de coupler le procédé ci-dessus, qui exploite les pics photoélectriques, à une méthode spectrale prenant en compte la totalité du spectre. La vallée du pic sera différente selon la profondeur de la source (atténuation différente); on va donc épurer le spectre et ne travailler que sur le fond. Le procédé donne une infinité de couples (intensité, profondeur) en travaillant sur les raies, et la méthode spectrale donne l'écrantage en travaillant sur le fond, donc le couple (intensité, profondeur) à considérer.

La figure 4 illustre un système 4 selon l'invention qui comprend un appareillage de détection 5 et un analyseur (non représenté) intégré ou relié à l'appareillage 5.

L'appareillage de détection 5 comprend le détecteur de rayonnement 2 (non visible sur la vue de la figure 4), un collimateur 7 dans lequel le détecteur 2 est logé pour recevoir le rayonnement émis par la région cylindrique 25, un pied 9 et une embase 8.

Le détecteur de rayonnement 2 peut être un scintillateur classique de type $LaBr_3$ couplé à un photomultiplicateur. Le collimateur 7 disposé sur le pied 9 est, par exemple, en plomb et acier pour constituer un blindage pour le détecteur de rayonnement.

Dans un mode de réalisation, l'analyseur, par exemple un analyseur multicanaux, possède un processeur de signal, une interface PCI connectée au détecteur de rayonnement 2 et un moyen d'affichage pour afficher l'information liée aux mesures.

Les informations des rayonnements gamma détectés par le scintillateur, amplifiés par le photomultiplicateur et analysés par l'analyseur multicanaux sont de préférence acheminées par câble vers un appareil de visualisation (moyen d'affichage), par exemple, un PC contenant le logiciel de visualisation spectrale ainsi que l'algorithme de traitement permettant de réaliser l'inversion. Ce dernier permet de reconstruire une image de la distribution volumique de la distribution d'activité volumique en profondeur selon le procédé de l'invention.

Grâce au déplacement du collimateur 7 et du détecteur de rayonnement 2 dans le collimateur, l'appareillage de détection 5 peut interroger une surface identique quelle que soit la distance entre le milieu à caractériser et le détecteur de rayonnement 2. Afin de faciliter le déplacement du détecteur de rayonnement 2 dans le collimateur 7, celui-ci contient une partie fixe 10 fixée au pied 9 et une partie mobile 11, par exemple une glissière sur le dessus. La partie mobile 11 peut être glissée sur la partie fixe 10 permettant la translation du détecteur de rayonnement 2 qui se trouve à l'intérieur du collimateur 7. Un vernier peut être utilisé pour indiquer la position du détecteur dans le collimateur.

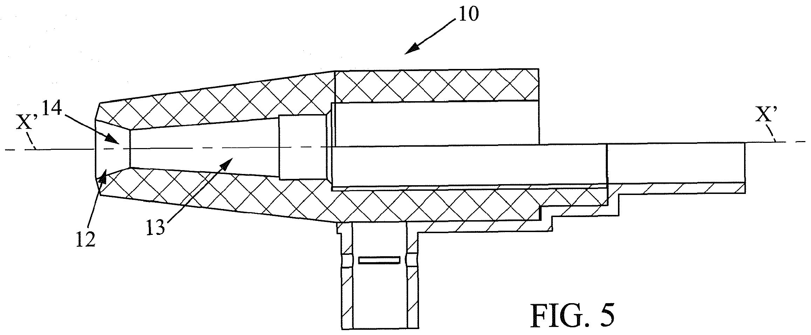

Pour interroger une surface identique quelle que soit la distance entre le milieu à caractériser et le détecteur de rayonnement, c'est-à-dire obtenir une propriété de « voir » la même surface à différentes distances de recul, la partie fixe 10 du collimateur 7 est munie d'une forme interne qui se décompose en deux cônes cylindriques opposés tête-bêche comme illustré sur la figure 5.

Le diamètre d'un premier cône extérieur 12 diminue et le diamètre d'un second cône intérieur 13 augmente de façon progressive vers l'intérieur du collimateur. La surface oblique du premier cône extérieur 12 est plus inclinée que celle du second cône intérieur 13, formant ainsi deux cônes asymétriques dont le second cône intérieur 13 est plus long que le premier cône 12. Entre ces deux cônes asymétriques, une gorge 14 est aménagée.

Pour que les rayonnements atténués arrivant sur le détecteur de rayonnement soient atténués de la même façon, on peut faire en sorte que la même épaisseur de blindage soit traversée quelle que soit l'angle d'incidence des rayonnements que l'on veut atténuer en provenance du milieu à caractériser.

Un système de visée laser, par exemple, permet d'assurer la perpendicularité de l'appareillage de détection 5 par rapport au milieu à caractériser.

L'utilisation de la technique proposée ici réduit le temps de caractérisation d'un milieu et le coût associé, ainsi que le risque d'exposition du personnel. L'invention est directement applicable sur les chantiers d'assainissement et de démantèlement, sur des structures verticales (mur) ou horizontales (sol).

Naturellement, la présente invention est sujette à de nombreuses variantes quant à sa mise en oeuvre. Bien que quelques modes de réalisation aient été décrits, on comprend bien qu'il n'est pas concevable d'identifier de manière exhaustive tous les modes possibles. Ces modes de réalisation décrits sont de simples illustrations de la présente invention. Diverses modifications peuvent être apportées sans sortir du cadre de l'invention qui ressort des revendications annexées.

**Revendications**

1. Procédé d'inspection d'une installation nucléaire, comprenant:

- disposer un détecteur de rayonnement (2) devant une surface (20) d'une portion de l'installation (1), le détecteur de rayonnement étant collimaté pour recevoir du rayonnement d'une région cylindrique (25) de la portion de l'installation;
- réaliser plusieurs mesures du rayonnement reçu par le détecteur de rayonnement (2) pour différentes énergies d'émission et différentes distances, le long de l'axe (X) de la région cylindrique, entre le détecteur de rayonnement (2) et la surface de la portion d'installation (1);
- analyser les mesures de rayonnement en subdivisant la région cylindrique en plusieurs mailles (3) de façon à estimer des niveaux de radioactivité respectifs dans les mailles, et

dans lequel l'analyse des mesures de rayonnement comprend une inversion d'un système linéaire C.a = m, qui est effectuée sur un calculateur, où:

- m est un vecteur ayant pour composantes les mesures de rayonnement réalisées;
- a est un vecteur ayant pour composantes les niveaux de radioactivité à estimer pour les différentes mailles; et
- C est une matrice ayant pour composantes des valeurs pré-calculées en fonction:

  - des énergies d'émission du rayonnement dans les mesures réalisées;
  - des distances, lors des mesures réalisées, entre le détecteur de rayonnement (2) et la surface (20) de la portion d'installation; et
  - des temps pendant lesquels les mesures de rayonnement sont réalisées.

2. Procédé selon la revendication 1, dans lequel le détecteur de rayonnement (2) est disposé de façon que la région cylindrique (25) ait son axe (X) perpendiculaire à la surface (20) de la portion d'installation (1).

3. Procédé selon l'une quelconque des revendications précédentes, dans lequel les mailles (3) sont des tranches de la région cylindrique (25) subdivisées perpendiculairement à l'axe (X) de la région cylindrique.

4. Procédé l'une des revendications précédentes, dans lequel l'inversion du système linéaire comprend l'application d'une méthode de régularisation.

5. Procédé selon l'une quelconque des revendications précédentes, dans lequel le rayonnement reçu par le détecteur de rayonnement (2) comprend du rayonnement gamma.

6. Procédé selon l'une quelconque des revendications précédentes, comprenant plusieurs mesures à des distances différentes entre le détecteur de rayonnement (2) et la surface (20) de la portion d'installation, pour des énergies d'émission respectives différentes.

7. Système pour inspecter une installation nucléaire, le système (4) comprenant :

   - un détecteur de rayonnement (2) collimaté pour recevoir du rayonnement d'une région cylindrique (25) d'une portion de l'installation (1) et réaliser plusieurs mesures dudit rayonnement pour différentes énergies d'émission et différentes distances, le long de l'axe (X) de la région cylindrique, entre le détecteur de rayonnement (2) et une surface (20) de la portion d'installation;
   - un analyseur pour analyser les mesures de rayonnement en subdivisant la région cylindrique en plusieurs mailles de façon à estimer des niveaux de radioactivité respectifs dans les mailles;

   **caractérisé par**

   - un calculateur pour effectuer ladite analyse des mesures,
   l'analyse des mesures de rayonnement comprenant une inversion d'un système linéaire C.a = m, où:

     - m est un vecteur ayant pour composantes les mesures de rayonnement réalisées;
     - a est un vecteur ayant pour composantes les niveaux de radioactivité à estimer pour les différentes mailles; et
     - C est une matrice ayant pour composantes des valeurs pré-calculées en fonction:

       - des énergies d'émission du rayonnement dans les mesures réalisées;
       - des distances, lors des mesures réalisées, entre le détecteur de rayonnement (2) et la surface (20) de la portion d'installation; et
       - des temps pendant lesquels les mesures de rayonnement sont réalisées.

8. Système selon la revendication 7, comprenant un collimateur (7) associé au détecteur de rayonnement (2), déplaçable pour n'envoyer vers le détecteur de rayonnement que du rayonnement provenant de ladite région cylindrique (25), quelle que soit la distance choisie entre le détecteur de rayonnement (2) et la surface (20) de la portion d'installation.

9. Système selon la revendication 8, dans lequel le collimateur a une partie mobile (11) et une partie fixe (10) permettant la translation du détecteur de rayonnement (2) le long de l'axe de la région cylindrique à l'intérieur du collimateur (7).

**Patentansprüche**

1. Verfahren zur Inspektion einer Kernkraftanlage, aufweisend:

   - Anordnen eines Strahlungsdetektors (2) vor einer Oberfläche (20) eines Abschnitts der Anlage (1), wobei der Strahlungsdetektor kollimiert ist, um Strahlung aus einem zylindrischen Gebiet (25) des Abschnitts der Anlage zu empfangen;
   - Durchführen von mehreren Messungen der von dem Strahlungsdetektor (2) empfangenen Strahlung für unterschiedliche Emissionsenergien und unterschiedliche Abstände zwischen dem Strahlungsdetektor (2) und der Oberfläche des Anlagenabschnitts (1) entlang der Achse (X) des zylindrischen Gebiets;
   - Analysieren der Strahlungsmessungen durch Unterteilen des zylindrischen Gebiets in mehrere Maschen (3), um jeweilige Radioaktivitätspegel in den Maschen zu schätzen, und

   in welchem die Analyse der Strahlungsmessungen eine Inversion eines linearen Systems C.a=m aufweist, die auf einem Rechner durchgeführt wird, wobei:

   * m ein Vektor ist, der als Komponenten die durchgeführten Strahlungsmessungen hat;
   * a ein Vektor ist, der als Komponenten die für die unterschiedlichen Maschen zu schätzenden Radioaktivitätspegel hat; und
   * C eine Matrix ist, die als Komponenten Werte hat, die vorab berechnet sind als Funktion von:

      - Emissionsenergien der Strahlung in den durchgeführten Messungen;
      - Abständen zwischen dem Strahlungsdetektor (2) und der Oberfläche (20) des Anlagenabschnitts bei den durchgeführten Messungen; und
      - Zeiten, zwischen denen die Strahlungsmessungen durchgeführt werden.

2. Verfahren nach Anspruch 1, in welchem der Strahlungsdetektor (2) derart angeordnet wird, dass das zylindrische Gebiet (25) seine Achse (X) senkrecht zur Oberfläche (20) des Anlagenabschnitts (1) hat.

3. Verfahren nach einem der vorstehenden Ansprüche, in welchem die Maschen (3) senkrecht zur Achse (X) des zylindrischen Gebiets unterteilte Scheiben des zylindrischen Gebiets (25) sind.

4. Verfahren nach einem der vorstehenden Ansprüche, in welchem die Inversion des linearen Systems die Anwendung eines Regularisationsverfahrens aufweist.

5. Verfahren nach einem der vorstehenden Ansprüche, in welchem die von dem Strahlungsdetektor (2) empfangene Strahlung Gammastrahlung aufweist.

6. Verfahren nach einem der vorstehenden Ansprüche, aufweisend mehrere Messungen bei unterschiedlichen Abständen zwischen dem Strahlungsdetektor (2) und der Oberfläche (20) des Anlagenabschnitts für jeweils unterschiedliche Emissionsenergien.

7. System zur Inspektion einer Kernkraftanlage, wobei das System (4) aufweist:

   - einen Strahlungsdetektor (2), der kollimiert ist, um Strahlung aus einem zylindrischen Gebiet (25) eines Abschnitts der Anlage (1) zu empfangen und um mehrere Messungen der Strahlung für unterschiedliche Emissionsenergien und unterschiedliche Abstände zwischen dem Strahlungsdetektor (2) und der Oberfläche (20) des Anlagenabschnitts entlang der Achse (X) des zylindrischen Gebiets durchzuführen;
   - einen Analysator zum Analysieren der Strahlungsmessungen durch Unterteilen des zylindrischen Gebiets in mehrere Maschen, um jeweilige Radioaktivitätspegel in den Maschen zu schätzen;

   **gekennzeichnet durch**

   - einen Rechner zum Durchführen der Analyse der Messungen,

wobei die Analyse der Strahlungsmessungen eine Inversion eines linearen Systems C.a=m aufweist, wobei:

* m ein Vektor ist, der als Komponenten die durchgeführten Strahlungsmessungen hat;
* a ein Vektor ist, der als Komponenten die für die unterschiedlichen Maschen zu schätzenden Radioaktivitätspegel hat; und
* C eine Matrix ist, die als Komponenten Werte hat, die vorab berechnet sind als Funktion von:

- Emissionsenergien der Strahlung in den durchgeführten Messungen;
- Abständen zwischen dem Strahlungsdetektor (2) und der Oberfläche (20) des Anlagenabschnitts bei den durchgeführten Messungen; und
- Zeiten, zwischen denen die Strahlungsmessungen durchgeführt werden.

8. System nach Anspruch 7, aufweisend einen dem Strahlungsdetektor (2) zugeordneten Kollimator (2), der verschiebbar ist, um für jeden beliebigen gewählten Abstand zwischen dem Strahlungsdetektor (2) und der Oberfläche (20) des Anlagenabschnitts nur die aus dem zylindrischen Gebiet (25) stammende Strahlung zu dem Strahlungsdetektor zu übertragen.

9. System nach Anspruch 8, in welchem der Kollimator einen mobilen Teil (11) und einen stationären Teil (10) aufweist, die die Verschiebung des Strahlungsdetektors (2) entlang der Achse des zylindrischen Gebiets im Innern des Kollimators (7) erlauben.

## Claims

1. A method of inspecting a nuclear facility, comprising:

- arranging a radiation detector (2) in front of a surface (20) of a portion of the facility (1), the radiation detector being collimated to receive radiation from a cylindrical region (25) of the portion of the facility;
- taking several measurements of the radiation received by the radiation detector (2) for different emission energies and different distances, along the axis (X) of the cylindrical region, between the radiation detector (2) and the surface of the portion of facility (1); and
- analyzing the radiation measurements by subdividing the cylindrical region into several meshes (3) so as to estimate respective levels of radioactivity in the meshes,

in which the analysis of the radiation measurements involves an inversion of a linear system $\underline{\underline{C}}.\underline{a} = \underline{m}$, being made on a calculator, where:

• $\underline{m}$ is a vector the components of which are the radiation measurements taken;
• $\underline{a}$ is a vector the components of which are the levels of radioactivity that are to be estimated for the various meshes; and
• $\underline{\underline{C}}$ is a matrix, the components of which are values which are precalculated as a function:

- of the emission energies of the radiation in the measurements taken;
- of the distances, at the time of the measurements taken, between the radiation detector (2) and the surface (20) of the portion of facility; and
- of the times during which the radiation measurements are taken.

2. The method as claimed in claim 1, in which the radiation detector (2) is arranged in such a way that the cylindrical region (25) has its axis (X) perpendicular to the surface (20) of the portion of facility (1).

3. The method as claimed in either one of the preceding claims, in which the meshes (3) are slices of the cylindrical region (25) which are subdivided perpendicular to the axis (X) of the cylindrical region.

4. The method as claimed in either one of the preceding claims, in which the inversion of the linear system comprises the application of a regularization method.

5. The method as claimed in any one of the preceding claims, in which the radiation received by the radiation detector (2) comprises gamma radiation.

6. The method as claimed in any one of the preceding claims, comprising several measurements at different distances between the radiation detector (2) and the surface (20) of the portion of facility, for different respective emission energies.

7. A system for inspecting a nuclear facility, the system (4) comprising:

   - a radiation detector (2) collimated to receive radiation from a cylindrical region (25) of a portion of the facility (1) and to take several measurements of said radiation for different emission energies and different distances, along the axis (X) of the cylindrical region, between the radiation detector (2) and a surface (20) of the portion of facility; and
   - an analyzer for analyzing the radiation measurements by subdividing the cylindrical region into several meshes so as to estimate respective levels of radioactivity in the meshes,

   **characterized by**

   - a calculator to make said measurements analysis,

   the analysis of the radiation measurements comprising an inversion of a linear system $\underline{\underline{C}}.\underline{a} = \underline{m}$, being made on a calculator, where:

   - $\underline{m}$ is a vector the components of which are the radiation measurements taken;
   - $\underline{a}$ is a vector the components of which are the levels of radioactivity that are to be estimated for the various meshes; and
   - $\underline{C}$ is a matrix, the components of which are values which are precalculated as a function:

     - of the emission energies of the radiation in the measurements taken;
     - of the distances, at the time of the measurements taken, between the radiation detector (2) and the surface (20) of the portion of facility; and
     - of the times during which the radiation measurements are taken.

8. The system as claimed in claim 7, comprising a collimator (7) associated with the radiation detector (2), movable so as to send to the radiation detector only radiation coming from said cylindrical region (25), regardless of the chosen distance between the radiation detector (2) and the surface (20) of the portion of facility.

9. The system as claimed in claim 8, in which the collimator has a moving part (11) and a fixed part (10) allowing the radiation detector (2) a translational movement along the axis of the cylindrical region inside the collimator (7).

FIG. 1

FIG. 2

FIG. 3

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6528797 B
- US 2003136916 A1

**Littérature non-brevet citée dans la description**

- **A. AL-GHAMDI ; X. G. XU.** Estimating the Depth of Embedded Contaminants From in-Situ Gamma Spectroscopic Measurements. *Health Physics,* Mai 2003, vol. 84 (5), 632-636
- **M. KORUN et al.** In-situ measurements of the radioactive fallout deposit. *Nuclear Instruments and Methods in Physics Research,* Février 1991, vol. A300 (3), 611-615
- **M. KORUN et al.** In-situ measurement of Cs distribution in the soil. *Nuclear Instruments and Methods in Physics Research,* Septembre 1994, vol. B93 (4), 485-491
- **P.C. HANSEN.** Analysis of discrete ill-posed problems by means of the L-curve. *SIAM Review,* Décembre 1992, vol. 34 (4), 561-580